# EUROPEAN PATENT APPLICATION

(11) **EP 4 571 435 A1**
(43) Date of publication of application: **18.06.2025**
(21) Application number: 23216576.1
(22) Date of filing: 14.12.2023
(51) Int. Cl.: G05B 17/02, D06F 34/28

(54) **METHOD AND SYSTEM FOR ACHIEVING A TARGET CLEANING PERFORMANCE WITH A HOUSEHOLD APPLIANCE**

(71) Applicant: Henkel AG & Co. KGaA, 40589 Düsseldorf (DE)
(72) Inventor: Kessler, Arnd, 40789 Monheim am Rhein (DE); Hardacker, Ingo, 46499 Hamminkeln (DE); Ruiz Hernandez, Robert, 40211 Düsseldorf (DE); Linz, Sergio, 50825 Köln (DE)

(57) **Abstract**

A method and system for achieving a target treatment performance with a household appliance is provided. It comprises the steps of obtaining a master model and a base model. The former establishes a relationship between reference configuration parameter values and values of achievable treatment performance for a reference appliance; the reference configuration parameters comprise a parameter relating to a setting of the reference appliance, a parameter relating to items to be treated and a parameter relating to a treating agent. The base model is generated similarly for the user's appliance. Suitable reference configuration parameter values are obtained using the reference model. Acceptable configuration parameter values are obtained using the base model. The two sets are compared to determine recommended configuration parameter values.

## Description

### TECHNICAL FIELD

The invention relates to the field of methods for improving the cleaning performance of household appliances in particular to ensure that a target cleaning performance is achieved using a household appliance, and that the cleaning performance is comparable to that which can be achieved with other brands of household appliances.

### TECHNOLOGICAL BACKGROUND

Household appliances such as washing machines, dishwashers, dryers, irons typically comprise several preset programs. A user can select the most suitable program in order to perform a treatment cycle on items to be cleaned, dried or ironed. Despite an increase in the number of available programs or preset settings, users are either provided fixed values for the parameters based on assumptions made by the appliance manufacturer on the outcome of the treatment cycle, or users need to set all the parameters individually without having the required technical expertise to understand whether their selection is correct.

Applicant described a method to optimize the selection of cleaning parameters in order to achieve a target cleaning performance in its patent publication WO2021/078941 A1. According to this document, a cleaning performance can be modelled mathematically using a function (generally a polynomial function of multiple variables) that takes into consideration a plurality of parameters influencing the cleaning process, such as wash temperature, cleaning duration, quantity of cleaning agent, wash load to name a few.

This modelling enables users to adjust cleaning parameters in order to achieve a desired cleaning performance and can also provide insights into the achievable cleaning performance with a given set of cleaning parameters.

Despite the advantages provided by such an approach, there remains a strong dependency between the achievable cleaning performance and the type of household appliance used to perform a cleaning task.

In the case of washing machines for example, differences in technologies used in appliances from different manufacturers lead to different stain removal performances. The latter is for example influenced by the water supply systems, circulation, drum geometry and design, sensors used in the appliance to monitor and adapt the cleaning processes, the pre-stored cleaning programs available. For the cheaper models, the mechanical limitations of appliances can lead to the presence of residues during stain removal and to less satisfactory cleaning performances when using the same amounts of cleaning agents and while performing comparable cleaning programs as with other brands of appliances.

In the case of dishwashers similar observations can be made. Differences between technologies found across models and manufacturers of these household appliances brands lead to differences in achievable performances. Among technological differences one may for example find: different pump dynamics, spray arm geometry and design, basket construction, sensors used in the appliance, pre-stored programs.

The solution provided by the Applicant in WO2021/078941 A1 does not teach how to enable any user to achieve a certain cleaning performance independently of the model/brand of the appliance that implements the cleaning process.

For the above reasons, a method for achieving a target cleaning performance with a household appliance is sought.

### SUMMARY OF THE INVENTION

To address the above need, the invention provides a method for achieving a target treatment performance with a household appliance, the method comprising:
- obtaining at least one master model establishing a relationship between different sets of reference configuration parameter values of treatment cycles and values of achievable treatment performance for at least one reference appliance, wherein the different sets of reference configuration parameters comprise at least one parameter relating to a setting of treatment cycles of the reference appliance, at least one parameter relating to items to be treated and at least one parameter relating to a treating agent dispensed during treatment cycles in the at least one reference appliance;
- obtaining a base model establishing a relationship between different sets of configuration parameter values of treatment cycles and values of achievable treatment performance values for the household appliance, wherein the different sets of configuration parameters comprise at least one parameter relating to a setting of treatment cycles of the household appliance, at least one parameter relating to items to be treated and at least one parameter relating to a treating agent dispensed during treatment cycles in the household appliance;

- obtaining a value for the at least one parameter relating to the items to be treated;
- obtaining a first target treatment performance to be achieved by a treatment cycle run by the household appliance;
- identifying, using the master model, at least one set of suitable reference configuration parameter values comprising the obtained value for the at least one parameter relating to the items to be treated and suitable for achieving a value for the first target treatment performance differing from a highest achievable first target treatment performance value by less than a first preset amount;
- identifying, using the base model, at least one set of acceptable configuration parameter values comprising the obtained value for the at least one parameter relating to the items to be treated and suitable for achieving one among : the first target treatment performance value, a treatment performance value higher than the first target treatment performance value, and a target treatment performance value differing from the first target treatment performance value by less than a second preset amount;
- comparing the suitable reference configuration parameter values with the acceptable configuration parameter values and;
- determining, based on the comparison, a set of recommended configuration parameter values from the acceptable configuration parameter values that comprise at least one parameter value matching parameter values of the suitable reference configuration parameter values or that differ from the suitable reference configuration parameter values by less than a predetermined amount.

The invention provides a means to align the performance of a treatment cycle independently of the brand/model type and specific limitations of a given appliance. A principle of the invention relies on the observation that many different parameters influence the performance of a treatment cycle: some are related to the appliance itself, such as for example the pre-stored programs run by the appliance, temperature applied, drum rotation, duration of the treatment cycle, nature of the drum and technology used to implement the treatment cycle. Some other parameters relate to the items to be treated. In the case of a washing machine these can include stain type, fabric type, wash load, size of the items, color of the items for example. Other parameters relate to the treating agents used, for example the cleaning agents, detergent type, time of dispensing thereof, amounts dispensed. Changes in these parameters can all lead to a different treatment performance. The term "treatment performance" can typically comprise a score indicative of the cleanliness of the items to be treated, energy efficiency of the treatment cycle, CO2 emissions during the treatment cycle by the appliance, cost of the energy used during the treatment cycle.

The interdependency of all these parameters to achieve different treatment performance values can be modelled as a function of the different parameters as input and the treatment performance value as an output. A graphical representation in multiple dimensions can be obtained based on different tested and measured data points. From experimental data points, the function can be deduced using known interpolation means.

The invention comprises the steps of establishing at least one reference model. This can for example be based on a very well documented household appliance model or one that comprises the highest number of different options and can span a wide range of treatment performance values. More than one reference model can also be obtained. There does not need to be a criterion for selecting a reference appliance for establishing/obtaining an at least one reference model.

A model for the household appliance used by a user implementing the method of the invention is also acquired.

Based on the treatment cycle that is run and based on the desired result, a treatment performance is selected. Fixed inputs are provided, in particular an information relating to the item to be treated, for example the wash load and optionally any other information relating to the items to be cleaned in the example of a washing machine performing a cleaning cycle. These parameters are typically selected by a user on a user interface of the household appliance in the prior art. This type of information can also be collected similarly in the invention or be provided by the user in another way on another data processing device such as a computer, smart phone or tablet.

Using the first model relating to the reference appliance, a set of suitable parameter values usable to achieve the desired treatment performance is determined, for example by determining the sets of parameters comprising the fixed inputs, typically relating to the items to be treated and looking at the combination of parameter values that allow achieving a maximum achievable treatment performance value. It is also possible to search for combinations of parameter values that allow achieving an achievable treatment performance value that is above a certain value or that differs from the maximum achievable value by less than a certain percentage or that differs from the lowest achievable value by more than a certain percentage.

The same is done using the model relating to the appliance of the user, to determine a set of acceptable parameter values. This then leads to more than one set of combinations of parameter values. The selection of the most suitable combination is then decided based on the similarities between the suitable parameter values and the acceptable parameter values. With the intention of finding the most suitable configuration parameters of the household appliance of the user, so that the user can expect the same type of treatment performance as with a reference appliance (which can for example be the best model on the market, but too expensive for the user to change his currently owned appliance), the method of the invention offers a means to compensate for the differences between household appliance models using the method described above.

According to an embodiment, the method further comprises:
- selecting the recommended configuration parameters for a treatment cycle run by the household appliance.

According to an embodiment, the method further comprises:
- obtaining an information identifying the household appliance;
- obtaining the base model by selecting it from a database of models using the obtained information identifying the household appliance.

It is to be noted that it is also possible to allow the selection of a reference model, for example with the intention that users of the method of the invention may select the type of appliance they like in particular and try to modify parameters of the appliance they currently and/or parameters relating to the cleaning agent used during the treatment cycle, in order to achieve similar treatment performance values with the appliance they currently own as with the selected reference appliance.

According to an embodiment, the method further comprises:
- upon comparing the suitable reference configuration parameter values with the acceptable configuration parameter values, selecting a set of acceptable configuration parameter values comprising one or more parameter values relating to the setting of treatment cycles of the appliance that match corresponding parameter values relating to the setting of treatment cycles of the reference appliance in the suitable reference configuration parameter values;
- determining within the acceptable configuration parameter values a set of remaining acceptable configuration parameter values so that the recommended configuration parameter values are associated with a treatment performance value higher than or equal to the first target treatment performance value.

In this approach, the method of the invention attempts to set the parameters of the appliance at values comparable to those of the reference appliance. The other adjustable variables to achieve the desired treatment performance are then selected in particular among the parameters related to the treating agent, such as for example by changing the amount of cleaning agent dispensed or adapting the dispensing strategy. It is also possible to adjust the settings (values) of parameters relating to settings of treatment cycles of the household appliance, such as the duration of the treatment cycle, drum rotation, maximum temperature for example. A combination of both type of parameter values (those relating to the treating agent and those relating to the settings of treatment cycles of the appliance) can also be adjusted to achieve the desired treatment performance value.

According to an embodiment, the method further comprises:
- obtaining a second target treatment performance;
- determining within the acceptable configuration parameter values a set of remaining acceptable configuration parameter values so that the recommended configuration parameter values are associated with a second target treatment performance value differing from the highest achievable second target treatment performance value by less than a third preset amount.

In order to select a set of recommended configuration parameter values, especially when there is a choice to be made among a plurality of acceptable sets of parameter values, the method can further take into consideration a second target performance criterion to select that recommended set of values. If the first target treatment performance is for example a score relating to the cleanliness of the items to be treated, the second target treatment performance can relate to a CO2 emission during the treatment cycle. The set of values that maximizes the cleanliness and minimizes the CO2 emissions is then advantageously selected.

Naturally, it is possible to combine more than one and more than two target treatment performances to select the set of recommended configuration parameter values.

According to an embodiment, the method further comprises:
- upon comparing the suitable reference configuration parameter values with the acceptable configuration parameter values, selecting a set of acceptable configuration parameter values comprising a highest number of matching parameter values to at least one among:
- matching values between the setting of treatment cycles of the reference appliance in the suitable reference configuration parameter values and the setting of treatment cycles of the appliance in the acceptable configuration parameter values,
- matching values between the at least one parameter relating to a treating agent dispensed during treatment cycles in the at least one reference appliance in the suitable reference configuration parameter values and the at least one parameter relating to a treating agent dispensed during treatment cycles in the at least one appliance in the acceptable configuration parameter values.

According to an embodiment, the different sets of reference configuration parameters and the different sets of configuration parameters comprise at least two among:
- a load of items introduced inside the household appliance;
- a temperature inside a treatment chamber of the household appliance, during a treatment cycle run by the household appliance;
- a maximum temperature inside the treatment chamber of the household appliance during a treatment cycle run by the household appliance;
- a number of turns per second of a rotating element of the household appliance;
- a value of a water hardness of water used by the household appliance during the treatment cycle;
- a value of dirtiness of soilings on items to be treated;
- a duration of the treatment cycle;
- an amount of a type of a treating agent dispensed during the treatment cycle.

According to an embodiment, the first achievable treatment performance and second achievable treatment performance comprises at least one among:
- a cleanliness value of the treatment cycle;
- a number of soilings remaining on the items to be treated;
- a value indicative of the amount of water used during the treatment cycle;
- a value indicative of the amount of energy consumed during the treatment cycle;
- a value indicative of the greenhouse gas emissions generated during the treatment cycle;
- a duration of the treatment cycle;
- a value indicative of the noise generated by the household appliance during the treatment cycle;
- a temperature reached in a treatment chamber of the household appliance during the treatment cycle;
- a number of rotations per minute of a drum of the household appliance during the treatment cycle.

The invention also pertains to a system for achieving a target treatment performance with a household appliance, the system comprising:
- the household appliance;
- a data-processing device, capable of communicating with a storage medium and configured to:
   - obtain

   at least one master model establishing a relationship between different sets of reference configuration parameter values of treatment cycles and values of achievable treatment performance for at least one reference appliance, wherein the different sets of reference configuration parameters comprise at least one parameter relating to a setting of treatment cycles of the reference appliance, at least one parameter relating to items to be treated and at least one parameter relating to a treating agent dispensed during treatment cycles in the at least one reference appliance and
   a base model establishing a relationship between different sets of configuration parameter values of treatment cycles and values of achievable treatment performance values for the household appliance, wherein the different sets of configuration parameters comprise at least one parameter relating to a setting of treatment cycles of the household appliance, at least one parameter relating to items to be treated and at least one parameter relating to a treating agent dispensed during treatment cycles in the household appliance;
- obtain a value for the at least one parameter relating to the items to be treated;
- obtain a first target treatment performance to be achieved by a treatment cycle run by the household appliance;
- identify, using the master model, at least one set of suitable reference configuration parameter values comprising the obtained value for the at least one parameter relating to the items to be treated and suitable for achieving a value for the first target treatment performance differing from the highest achievable first target treatment performance value by less than a first preset amount;
- identify, using the base model, at least one set of acceptable configuration parameter values comprising the obtained value for the at least one parameter relating to the items to be treated and suitable for achieving one among : the first target treatment performance value, a treatment performance higher than the first target treatment performance value, and a target treatment performance value differing from the first target treatment performance value by less than a second preset amount;
- compare the suitable reference configuration parameter values with the acceptable configuration parameter values and;
- determine, based on the comparison, a set of recommended configuration parameter values from the acceptable configuration parameter values that comprise at least one parameter value matching parameter values of the suitable reference configuration parameter values or that differ from the suitable reference configuration parameter values by less than a predetermined amount.

In other words, the system is configured to implement the method as described above.

According to an embodiment, the system further comprises:
- at least one sensor to determine at least one configuration parameter value.

This sensor can for example be any type of sensor suitable for determining information relating to the items to be treated or information relating to the treating agent. For example, a camera or optical sensor of any known kind can be used to determine the amount of items to be cleaned, stain type, size and shape of the items to be cleaned and fabric type. Other sensors such as a gas sensor, a microphone, accelerometer, vibration sensor can also be used to determined patterns that can be related to the signature of an item to be cleaned placed inside the appliance. The type of cleaning agent used, its available amount are also parameters that can be determined using a sensor.

According to an embodiment, the system further comprises:
- a dosing device configured to be placed inside a treatment chamber of the household appliance and to dispense at least one cleaning agent into the treatment chamber.

This dosing device is advantageously not fixed inside the appliance but instead operates as a stand-along device which is typically placed in a rack in the case of a dishwasher or put inside the drum in the case of a washing machine. The dosing device typically comprises cartridges containing the cleaning agent, a dispensing mechanism and some electronics to control the dispensing. The dosing device can also comprise means for communicating with an external data processing device or comprise the data processing device already therein.

According to an embodiment, the dosing device is configured to dispense an adjustable amount of the at least one cleaning agent at an adjustable time of the treatment cycle, the adjustable amount and the adjustable time being further parameters part of the at least one parameter relating to a treating agent dispensed during treatment cycles in the household appliance.

### BRIEF DESRIPTION OF THE DRAWINGS

The present disclosure will hereinafter be described in conjunction with the following drawing figures, wherein like numerals denote like elements, and:
Fig. 1 is a flowchart illustrating steps of a method according to an exemplary embodiment;
Fig. 2 is a schematic representation of a reference appliance and of three types of configuration parameters that can be considered for determining the target treatment performance achievable with the reference appliance, as well as an appliance of a user and the corresponding recommended configuration parameters that can be determined using a model relating to the reference appliance and a model relating to the user's appliance;
Fig. 3 is a contour plot in two dimensions representing values of an achievable target treatment performance (cleanliness) as a function of detergent weight in grams and wash load in percentages for a reference appliance;
Fig. 4 is a contour plot in two dimensions representing values of an achievable target treatment performance (cleanliness) as a function of detergent weight in grams and wash load in percentages for an appliance that is not the reference appliance;
Fig. 5 is schematic representation of a system according to an exemplary embodiment.

### DETAILED DESCRIPTION

The invention provides a method for achieving a treatment performance that compensates for any hardware limitations of an appliance owned by a user and on which a treatment cycle is performed. The invention typically uses algorithms originating from a database of measurements conducted on appliances to extract therefrom interdependencies between different parameters influencing the performance achievable during a treatment cycle.

The invention can be applied to different type of appliances. It can more particularly be applied to dishwashers or washing machines. The following description and the associated figures focus more particularly on embodiments that relate to washing machines although the method of the invention and the associated system can equally be understood as applying to other appliances offering similar parameter adjustments possibilities. The terms "treating cycle" "treatment cycle" "treating agent" typically refer to cleaning cycles and cleaning agents.

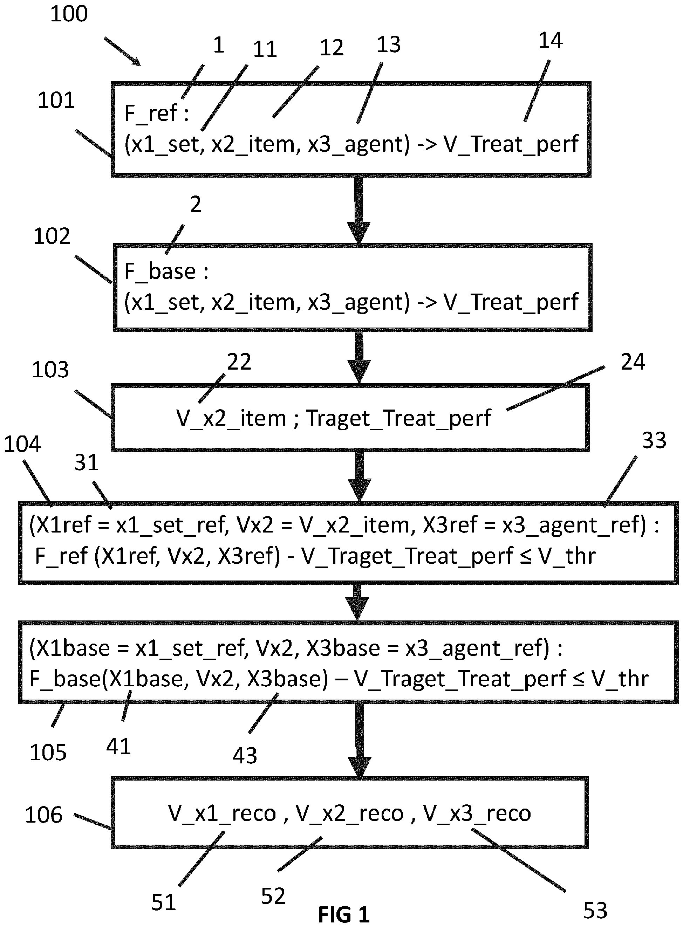

Figure 1 is a schematic flowchart highlighting some steps of an exemplary method 100 for achieving a target treatment performance 24 with a household appliance.

The invention identifies three main groups of parameter types that can affect the treatment performance:
- parameter values relating to the items to be treated 12, which may include among others information regarding the items to be treated: stain type, item type, item size, dirt load, wash load, damage condition of the items, color of textiles, textile types...
- parameter values relating to the settings of treating cycles 11 performed by the appliance, such as for example treatment cycle duration, rotation of the drum, maximum temperature, number of rinse cycles...
- parameter values relating to a treating agent 13 dispensing during the treatment cycle. These may include the type of treating agent (and it can include more than one treating agent), the amount of treating agent dispensed, the time of dispensing and combinations of treating agents dispensed during the treatment cycle.

These sets of parameter values affect the treatment performance 14 in complex ways. Applicant already described in a previous publication a method for modeling the interplay between parameters that affect a treatment performance using measured values and by interpolating them with polynomial equations.

The invention clusters parameters that affect the treatment performance into the above three categories and compares the achievable performance achieved with a reference appliance to that achievable with an appliance owned for example by a user. This comparison can identify sets of parameters that can be kept the same across both appliances and those that need to be adjusted so that users of different appliance model types or brands can all expect a certain treatment performance quality.

The invention uses a reference model 1 that is obtained 101 for at least one reference appliance which is considered in the context of the invention as being capable of achieving treatment performance values that are deemed to be of high quality by a user. The "quality" can be a rather subjective term but values can be given to the quality of the performance of a treatment or treating cycle based on user feedback or by measuring the remaining number of stains or soilings on cleaned items. The treatment performance can for example comprise any parameter among:
- a cleanliness value of the treatment cycle;
- a number of soilings remaining on the items to be treated;
- a value indicative of the amount of water used during the treatment cycle;
- a value indicative of the amount of energy consumed during the treatment cycle;
- a value indicative of the greenhouse gas emissions generated during the treatment cycle;
- a duration of the treatment cycle;
- a value indicative of the noise generated by the household appliance during the treatment cycle;
- a temperature reached in a treatment chamber of the household appliance during the treatment cycle;
- a number of rotations per minute of a drum of the household appliance during the treatment cycle.

The reference model 1 typically establishes a relationship between at least three parameter values (one parameter from each of the three categories outlined above) and a treatment performance value 14.

A base model 2 is further obtained 102 for a household appliance owned by the user. Similarly to the reference model 1, the base model 2 also establishes a relationship between at least three parameter values (one parameter from each of the three categories outlined above) and a treatment performance value 14.

Then information regarding the items to be treated 22 and a first target treatment performance 24 is obtained 103. Information regarding the items to be treated 22 corresponds to a fixed parameter, at least in that some of the parameter values within information regarding the items to be treated 22 are an intrinsic part of the treatment task set by the user: at least some of the items to be treated, or all of them, need to be treated / cleaned. For example, in a washing machine, the wash load can be a fixed parameter. However, it is also conceivable that the method 100 of the invention leads to an intermediary recommendation to remove some items of clothing to reduce wash load or to remove some items that would be deemed to be incompatible for the expected cleaning performance, due to a color mismatch or textile type mismatch for example.

The first target treatment performance 24 can typically be related to the cleanliness of the items that a user expects after the end of the treatment/cleaning cycle. This can be selected from among the range of achievable treatment performance values 14 of the reference appliance for example. The value of the first target treatment performance 24 is advantageously either the maximum cleanliness achievable with the reference appliance or a value that differs from that maximum cleanliness (e.g.: highest value) by less than a first preset amount for example less than a relative differ of 50%, or less than 40% or less than 30% or less than 20% or less than 10% or less than 5% or less than 1 %.

The method further comprises a step of identifying 104, using the reference model 1 a set of suitable reference configuration parameter values (31, 22, 33) such that they are associated with an achievable treatment performance value 14 that is equal to the first target treatment performance 24 or that it differs from that value by less than the first preset amount. Naturally, more than one set of suitable reference configuration parameter values (31, 22, 33) can be identified.

Similarly, the base model 2 is used to identify 105 a set of acceptable configuration parameter values (41, 22, 43). This set (or these sets) correspond to a combination of parameter values that are associated with an achievable treatment performance value 14 that is equal to the first target treatment performance 24 value or that it differs from that value by less than a second preset amount which can advantageously be equal to or selected from among the ranged indicated above for the first preset amount.

Based on a comparison of the set of suitable reference configuration parameter values (31, 22, 33) and the set of acceptable configuration parameter values (41, 22, 43), the method 100 then determines 106 a set of recommended configuration parameter values (51, 22, 53). The set of recommended configuration parameter values (51, 22, 53) corresponds to sets of acceptable configuration parameter values (41, 22, 43) that comprise at least one parameter value overlapping with values of the set of suitable reference configuration parameter values (31, 22, 33), in particular with respect to values referring to a setting of the treatment cycle 13, 31 of the reference appliance or an information regarding the treating agent 13, 33 that is dispensed during the treatment cycle run by the reference appliance.

For example, some of the parameters set on the reference appliance such as parameters of the selected program run by that appliance : maximum temperature, duration of the cycle, number of rinse cycles, can be chosen to be the same for the reference appliance and the appliance of the user. The other adjustable parameter values can then be selected differently on the appliance of the user to compensate for loss in treatment performance values when compared to the performance achieved with the reference appliance. For example, if the appliance of the user is less efficient in remove stains with the same program run as on the reference appliance, more treating agent or a different combination of treating agents can be selected on that appliance of the user.

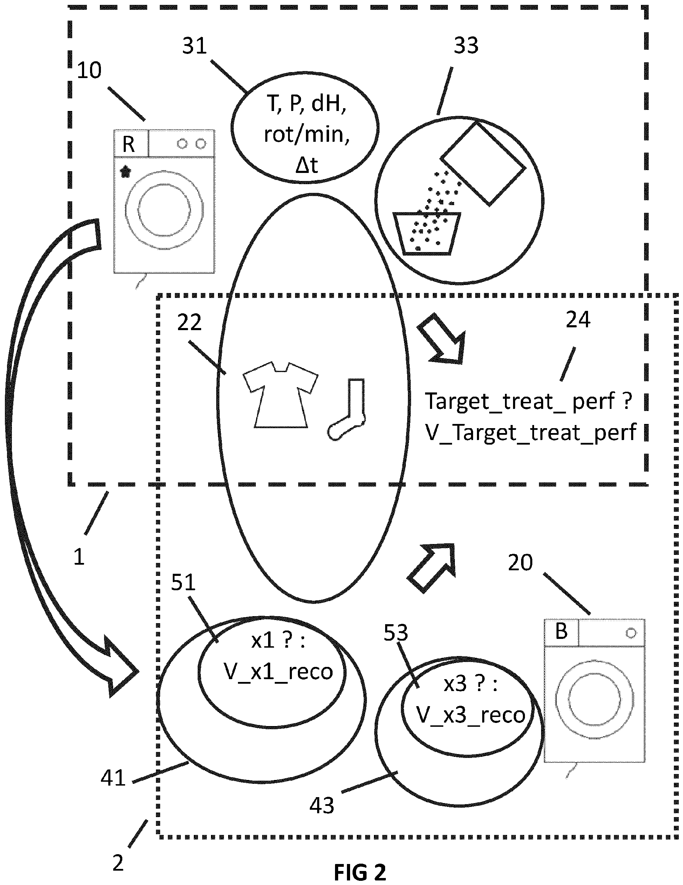

Figure 2 provides a schematic illustration of the method 100 described above. The reference appliance 10 is considered as being well known and a reference model 1 Is available for that reference appliance 10. This reference model 1 establishes relationships between sets of configuration parameter values including at least one parameter relating to a setting of treatment cycles 11 of the reference appliance 10, at least one parameter relating to items to be treated 12 and at least one parameter relating to a treating agent 13 dispensed during treatment cycles in the at least one reference appliance and associated treatment performance values 14.

With fixed wash load information, which corresponds to the parameter value or parameter values relating to items to be treated 22 and a first target treatment performance 24 value, the reference model 1 is used to determine sets of suitable reference configuration parameter values (31, 22, 33) that allow the reference appliance 10 to achieve or at least approach the first target treatment performance 24 value. The set of suitable reference configuration parameter values (31, 22, 33) comprise in particular parameter values of settings 31 of treatment cycle of the reference appliance 10 and parameter values relating to a treating agent 33 dispensed during treatment cycles that allow achieving the first target treatment performance 24 value.

Similarly, the base model 2 is used to determine acceptable configuration parameter values (41, 22, 43) and with these and based on a comparison with the suitable reference configuration parameter values (31, 22, 33) a set of recommended configuration parameter values (51, 22, 53). The recommended configuration parameter values (51, 22, 53) comprise ideally a maximum number of configuration parameter values that are identical with configuration parameters of the suitable reference configuration parameter values (31, 22, 33). Any number of identical or substantially identical values still renders the method 100 useful in determining a standard for performing a treatment cycle with an appliance so that a desired first target treatment performance 24 is achieved.

The acceptable configuration parameter values (41, 22, 43) comprise in particular parameter values of settings 41 of treatment cycle of the appliance 20 and parameter values relating to a treating agent 43 dispensed during treatment cycles that allow achieving the first target treatment performance 24 value. Similarly the recommended configuration parameter values (51,22, 53) comprise in particular parameter values of settings 51 of treatment cycle of the appliance 20 and parameter values relating to a treating agent 53 dispensed during treatment cycles that allow achieving the first target treatment performance 24 value. The recommended configuration parameter values (51, 22, 53) typically form a subgroup of the acceptable configuration parameter values (41, 22, 43) as seen on figure 2.

The recommended configuration parameter values (51, 22, 53) can be further selected in order to maximize a second target treatment performance value in the appliance 20 of the user. For example, the remaining parameter values that do not match those of the reference appliance 10 among the determined recommended sets of configuration parameter values (51, 22, 53) may be selected so as to reduce energy consumption or reduce carbon footprint of the treatment cycle or reduce costs associated with the running of the treatment cycle. A combination of different treatment performance values can also be selected for choosing the best set of recommended configuration parameter values (51, 22, 53).

It is to be noted that in order to determine optimized recommended configuration parameter values (51, 22, 53) the reference model 1 and the base model 2 establish relations between the groups of different configuration parameters discussed above and more than one treatment performance parameter.

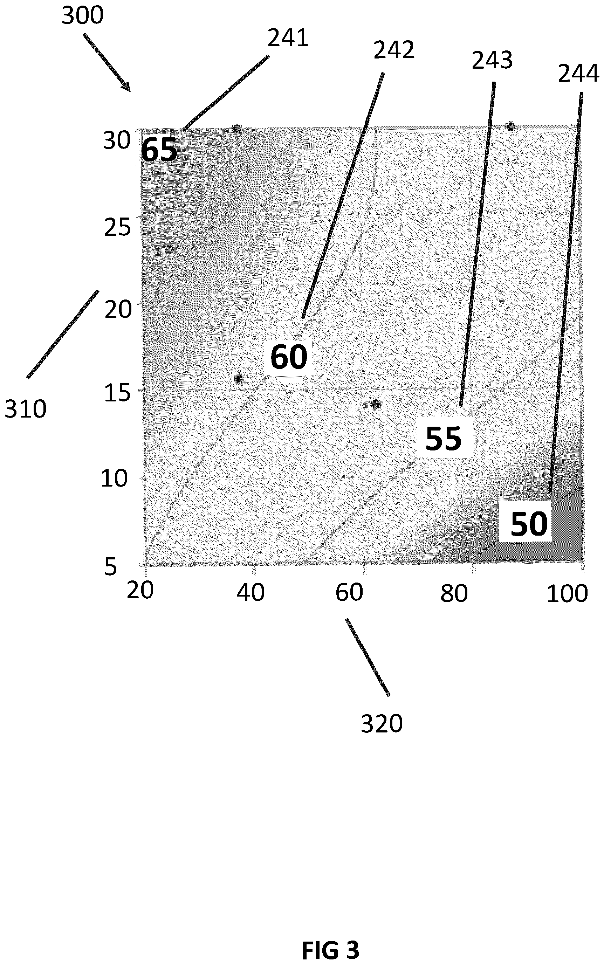

Figure 3 provides a contour plot 300 of the achievable treatment performance values 241, 242, 243, 244 of a Siemens WM16W540 washing machine as a function of wash load on the horizontal axis 320 and the amount of detergent (cleaning agent in g) dispensed during the cleaning cycle on the vertical axis 310. As is expected, the achievable treatment performance value 241 at low load and high amount of dispensed cleaning agent is higher than the achievable treatment performance 244 at high wash loads and lower amounts of dispensed cleaning agent.

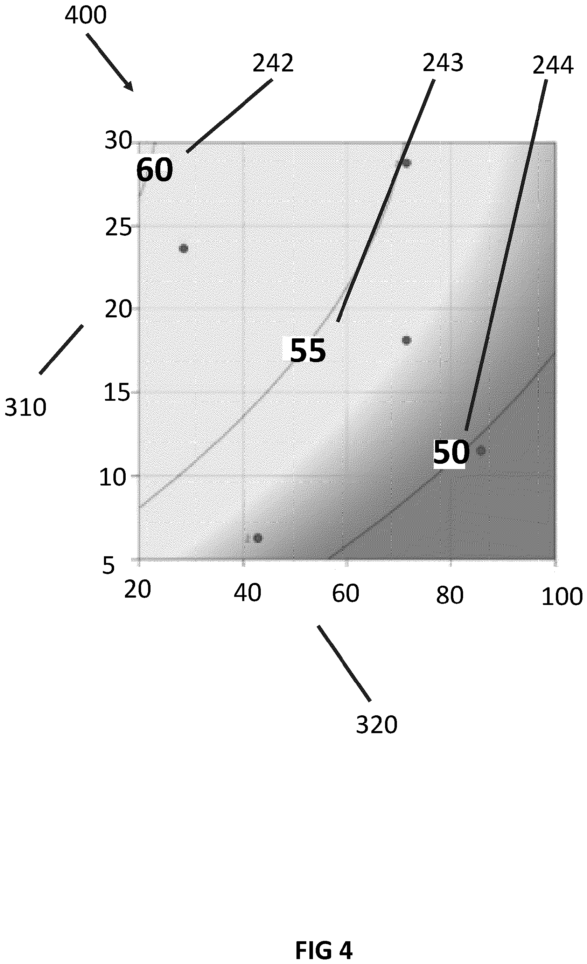

The contour plot 300 of figure 3 is to be further compared with the contour plot 400 of figure 4 which provides views of the achievable treatment performance values 242, 243, 244 of a Bauknecht WA Soft 7F4 washing machine as a function of wash load on the horizontal axis 320 and the amount of detergent (cleaning agent in g) dispensed during the cleaning cycle on the vertical axis 310. When compared to the achievable treatment performance values 241-244 of the washing machine of figure 3, one can notice that the contour plot 400 of figure 4 does not allow achieving the highest treatment performance value 241 seen in figure 3. In order to achieve the same treatment performance value with a given wash load with the Bauknecht WA Soft 7F4 as with the Siemens WM16W540, it is necessary to increase the amount of cleaning agent dispensed.

It is also possible to adjust other parameters that are not seen on the simplified two-dimensional representation of figures 3 and 4. For example, it is possible to increase the maximum temperature reached during the cleaning cycle, increase the number of rinse cycles, or also change the wash load by removing some items of laundry. In practice, the reference model 1 and the base model 2 are typically more complex than the simplified contour plot representation of figures 3 and 4 and represent the dependencies between different configuration parameters and associated treatment performance values across many dimensions.

To generate the reference model 1 and the base model 2, a plurality of treatment cycles are performed on the reference appliance 10 and the appliance 20, in order to generate a map of data points. The models are then generate based on these data points using interpolation techniques and advantageously predictive analytics tools based on machine learning or deep learning techniques known in the art.

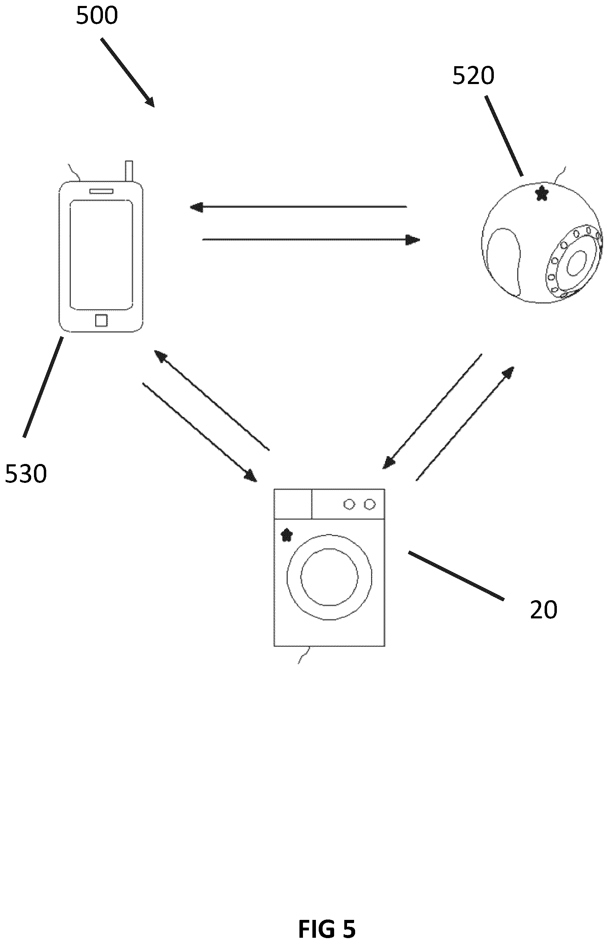

The method 100 of the invention can be implemented with the help of a system 500 such as that schematically represented on figure 5. The household appliance 20 can typically be configured either by a user selecting settings/parameter values on a user interface of the appliance 20 (for example by activating different touch pads or buttons/knobs) or remotely control the appliance 20 for example with a remote control, smartphone, or any other form of data processing device 530. The data processing device 530 can typically be configured to implement steps of the method 100 described above, in particular accessing the reference model 1 and base model 2 via a network in an external database or in an internal memory associated with the data processing device 530. The determination of the sets of suitable reference configuration parameter values (31, 22, 33), of the acceptable configuration parameter values (41, 22, 43) and of the recommended configuration parameter values (51, 52, 53) can also occur with the data processing device 530.

Part of the parameter values, in particular parameter values relating to the condition of the items to be treated: wash load, textile type, stain type, item type, item state of wear, patterns on the items, color of the items, can for example be determined using sensors arranged on the data processing device 530, on or in the appliance 20 or being further stand alone sensor device that communicate measured values to the data processing device 530.

The method 100 can further be implemented with increased flexibility in that the dispensing of the treating agent occurs from a stand-alone dispensing device 520 such as for example a wash ball as illustrated on figure 5. The dispensing device 520 can receive dispensing instructions from the appliance 20 and/or from the data-processing device 530. It can also be manually programmed by a user prior to activation, based on recommended configuration parameter values determined with the method 100 described above.

The above method 100 and system 500 enable users to achieve treatment performances comparable to those expected on other brands /models of appliances by adjusting specific parameters of the treatment cycle on the appliances 20 they own. The adjustments may concern the removal of items to be cleaned to reduce wash load or remove items for which a specific treatment cycle would be more suitable due to an incompatibility with the other items present in the load (incompatibility due for example to: difference in color, nature of stains, intensity of treatment required, textile type, size). More particularly the adjustment concerns properties of the treatment agent dispensed during the treatment cycle such as an increase of the amount of cleaning agent dispensed or combining more than one treatment agent. Alternatively or in combination with the above adjustments a different selection of settings of the program run by the appliance can also occur such as an increase in the maximum temperature run by the treatment cycle, addition of one or more rinse cycles, increase of the duration of the treatment cycle.

The above adjustments are predicted by the method 100 described above using the reference model 1 and the base model 2.

The steps of the examples and embodiments described above can be implemented by a processor such as a computer. A computer program product comprising steps of the above-described method can be used to implement the method on a computer.

It is possible to store a computer program comprising instructions to implement the method of the invention on different non-transitory computer readable storage mediums. These could for example comprise a processor or chip, FPGA (field programable gate array), an electronic circuit comprising several processors or chips, a hard drive, a flash or SD card, a USB stick, a CD-ROM or DVD-ROM or Blue-Ray disc, or a diskette.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the various embodiments in any way. Rather, the foregoing detailed description will provide those skilled in the art with a convenient road map for implementing an exemplary embodiment as contemplated herein. It being understood that various changes may be made in the function and arrangement of elements described in an exemplary embodiment without departing from the scope of the various embodiments as set forth in the appended claims.

## Claims

1. A method (100) for achieving a target treatment performance (24) with a household appliance (20), the method (100) comprising:
- obtaining (101) at least one master model (1) establishing a relationship between different sets of reference configuration parameter values of treatment cycles and values of achievable treatment performance for at least one reference appliance (10), wherein the different sets of reference configuration parameters comprise at least one parameter relating to a setting of treatment cycles (11) of the reference appliance, at least one parameter relating to items to be treated (12) and at least one parameter relating to a treating agent (13) dispensed during treatment cycles in the at least one reference appliance (10);
- obtaining (102) a base model (2) establishing a relationship between different sets of configuration parameter values of treatment cycles and values of achievable treatment performance values (14) for the household appliance (20), wherein the different sets of configuration parameters comprise at least one parameter relating to a setting of treatment cycles (11) of the household appliance, at least one parameter relating to items to be treated (12) and at least one parameter relating to a treating agent (13) dispensed during treatment cycles in the household appliance (20);
- obtaining (103) a value (22) for the at least one parameter relating to the items to be treated;
- obtaining (103) a first target treatment performance (24) to be achieved by a treatment cycle run by the household appliance (20);
- identifying (104), using the master model (1), at least one set of suitable reference configuration parameter values (31, 22, 33) comprising the obtained value for the at least one parameter relating to the items to be treated (22) and suitable for achieving a value for the first target treatment performance (24) differing from the highest achievable first target treatment performance value by less than a first preset amount;
- identifying (105), using the base model (2), at least one set of acceptable configuration parameter values (41, 22, 43) comprising the obtained value for the at least one parameter relating to the items to be treated (22) and suitable for achieving one among : the first target treatment performance (24) value, a treatment performance higher than the first target treatment performance value, and a target treatment performance value differing from the first target treatment performance value by less than a second preset amount;
- comparing the suitable reference configuration parameter values with the acceptable configuration parameter values and;
- determining (106), based on the comparison, a set of recommended configuration parameter values (51, 52, 53) from the acceptable configuration parameter values (41, 22, 43) that comprise at least one parameter value matching parameter values of the suitable reference configuration parameter values (31, 22, 33) or that differ from the suitable reference configuration parameter values (31, 22, 33) by less than a predetermined amount.

2. The method (100) of claim 1, further comprising:
- selecting the recommended configuration parameter values (51, 52, 53) for a treatment cycle run by the household appliance (20).

3. The method (100) of any one of the preceding claims, further comprising:
- obtaining an information identifying the household appliance (20);
- obtaining the base model (2) by selecting it from a database of models using the obtained information identifying the household appliance (20).

4. The method (100) of any one of the preceding claims, further comprising:
- upon comparing the suitable reference configuration parameter values (31, 22, 33) with the acceptable configuration parameter values (41, 22, 43), selecting a set of acceptable configuration parameter values comprising one or more parameter values relating to the setting of treatment cycles of the appliance that match corresponding parameter values relating to the setting of treatment cycles of the reference appliance (10) in the suitable reference configuration parameter values (31, 22, 33);
- determining within the acceptable configuration parameter values (41, 22, 43) a set of remaining acceptable configuration parameter values so that the recommended configuration parameter values (51, 52, 53) are associated with a treatment performance value (14) higher than or equal to the first target treatment performance value (24).

5. The method (100) of claim 4, further comprising:
- obtaining a second target treatment performance;
- determining within the acceptable configuration parameter values (41, 22, 43) a set of remaining acceptable configuration parameter values so that the recommended configuration parameter values (51, 52, 53) are associated with a second target treatment performance value differing from the highest achievable second target treatment performance value by less than a third preset amount.

6. The method (100) of any one of claims 4 or 5, further comprising:
- upon comparing the suitable reference configuration parameter values (31, 22, 33) with the acceptable configuration parameter values (41, 22, 43), selecting a set of acceptable configuration parameter values comprising a highest number of matching parameter values to at least one among:
- matching values between the setting of treatment cycles (31) of the reference appliance in the suitable reference configuration parameter values (31, 22, 33) and the setting of treatment cycles (41) of the appliance in the acceptable configuration parameter values (41, 22, 43),
- matching values between the at least one parameter relating to a treating agent (33) dispensed during treatment cycles in the at least one reference appliance (10) in the suitable reference configuration parameter values (31, 22, 33) and the at least one parameter relating to a treating agent (43) dispensed during treatment cycles in the at least one appliance in the acceptable configuration parameter values (41, 22, 43).

7. The method (100) of any one of the preceding claims, wherein the different sets of reference configuration parameters and the different sets of configuration parameters comprise at least two among:
- a load of items introduced inside the household appliance;
- a temperature inside a treatment chamber of the household appliance, during a treatment cycle run by the household appliance;
- a maximum temperature inside the treatment chamber of the household appliance during a treatment cycle run by the household appliance;
- a number of turns per second of a rotating element of the household appliance;
- a value of a water hardness of water used by the household appliance during the treatment cycle;
- a value of dirtiness of soilings on items to be treated;
- a duration of the treatment cycle;
- an amount of a type of a treating agent dispensed during the treatment cycle.

8. The method (100) of any one of the preceding claims, wherein the first achievable treatment performance and second achievable treatment performance comprises at least one among:
- a cleanliness value of the treatment cycle;
- a number of soilings remaining on the items to be treated;
- a value indicative of the amount of water used during the treatment cycle;
- a value indicative of the amount of energy consumed during the treatment cycle;
- a value indicative of the greenhouse gas emissions generated during the treatment cycle;
- a duration of the treatment cycle;
- a value indicative of the noise generated by the household appliance during the treatment cycle;
- a temperature reached in a treatment chamber of the household appliance during the treatment cycle;
- a number of rotations per minute of a drum of the household appliance during the treatment cycle.

9. System (500) for achieving a target treatment performance (14) with a household appliance (20), the system (500) comprising:
- the household appliance (20);
- a data-processing device (530), capable of communicating with a storage medium and configured to:
- obtain
at least one master model (1) establishing a relationship between different sets of reference configuration parameter values of treatment cycles and values of achievable treatment performance (14) for at least one reference appliance (10), wherein the different sets of reference configuration parameters comprise at least one parameter relating to a setting of treatment cycles (11) of the reference appliance, at least one parameter relating to items to be treated (12) and at least one parameter relating to a treating agent (13) dispensed during treatment cycles in the at least one reference appliance (10) and
a base model (2) establishing a relationship between different sets of configuration parameter values of treatment cycles and values of achievable treatment performance values (14) for the household appliance (20), wherein the different sets of configuration parameters comprise at least one parameter relating to a setting of treatment cycles (11) of the household appliance, at least one parameter relating to items to be treated (12) and at least one parameter relating to a treating (13) agent dispensed during treatment cycles in the household appliance (20);
- obtain a value for the at least one parameter relating to the items to be treated (22);
- obtain a first target treatment performance (24) to be achieved by a treatment cycle run by the household appliance (20);
- identify, using the master model (1), at least one set of suitable reference configuration parameter values (31, 22, 33) comprising the obtained value for the at least one parameter relating to the items to be treated (22) and suitable for achieving a value for the first target treatment performance differing from the highest achievable first target treatment performance value by less than a first preset amount;
- identify, using the base model (2), at least one set of acceptable configuration parameter values (41, 22, 43) comprising the obtained value for the at least one parameter relating to the items to be treated (22) and suitable for achieving one among : the first target treatment performance value, a treatment performance higher than the first target treatment performance value, and a target treatment performance value differing from the first target treatment performance value by less than the first preset amount;
- compare the suitable reference configuration parameter values (31, 22, 33) with the acceptable configuration parameter values (41, 22, 43) and;
- determine, based on the comparison, a set of recommended configuration parameter values (51, 52, 53) from the acceptable configuration parameter values (41, 22, 43) that comprise at least one parameter value matching parameter values of the suitable reference configuration parameter values (31, 22, 33) or that differ from the suitable reference configuration parameter values by less than a predetermined amount.

10. The system (500) of claim 9, further comprising:
- at least one sensor to determine at least one configuration parameter value.

11. The system (500) of any one of claims 9 or 10, further comprising:
- a dosing device (520) configured to be placed inside a treatment chamber of the household appliance (20) and to dispense at least one cleaning agent into the treatment chamber.

12. The system (500) according to claim 11, wherein the dosing device (520) is configured to dispense an adjustable amount of the at least one cleaning agent at an adjustable time of the treatment cycle, the adjustable amount and the adjustable time being further parameters part of the at least one parameter relating to a treating agent dispensed during treatment cycles in the household appliance (20).
